# EUROPÄISCHE PATENTSCHRIFT

(11) **EP 0 761 505 B1**
(45) Veröffentlichungstag und Bekanntmachung des Hinweises auf die Patenterteilung: **10.01.2001**
(21) Anmeldenummer: 96104584.6
(22) Anmeldetag: 22.03.1996
(51) Int. Cl.: B60R 21/13

(54) **Kupplung für ein verlagerbares Sicherheitsteil eines Fahrzeugs, insbesondere für einen Überrollbügel**
Coupling for a deployable safety element in a vehicle, in particular a roll-over bar
Dispositif d'accouplement déployable pour un élément de sécurité d'un véhicule, notamment pour un arceau de sécurité

(30) Priorität: 14.08.1995 DE 19529875
(43) Veröffentlichungstag der Anmeldung: 12.03.1997
(73) Patentinhaber: Bayerische Motoren Werke Aktiengesellschaft, 80788 München (DE)
(72) Erfinder: Banda, Ruth, 80933 München (DE); Heiner, Lothar, 80933 München (DE)

(56) Entgegenhaltungen:
- DE-A- 2 258 063
- DE-A- 4 307 963

## Beschreibung

Die Erfindung bezieht sich auf eine Kupplung nach dem Oberbegriff des Patentanspruches 1.

Bei einer bekannten derartigen Kupplung (DE 43 07 963 A1) ist das axial bewegliche Sperrglied über eine Schraubverbindung mit einem aus dem Elektromagneten herausragenden Betätigungsstift verschraubt. Da der gesamte Auslösemechanismus mit der Haltestange, den Sperrkugeln und dem axial verlagerbaren Sperrglied, dort als Betätigungshülse bezeichnet, außerhalb des Elektromagneten angeordnet ist. ist zum Einbau der vorbekannten Kupplung ein relativ hoher Bauraum erforderlich, der bei beengten Raumverhältnissen in Fahrzeugen häufig nicht vorhanden ist.

Der Erfindung liegt die Aufgabe zugrunde, eine Kupplung der vorausgesetzten Bauart zu schaffen, die einen geringen Platzbedarf hat und trotzdem einfach aufgebaut ist und keine übertrieben hohe Präzision voraussetzt.

Diese Aufgabe wird erfindungsgemäß durch die im Patentanspruch 1 angegebenen Merkmale gelöst. Die neue Kupplung baut insbesondere in Verlagerungsrichtung des Sicherheitsteils sehr kompakt. In Betätigungsrichtung des Magneten entsteht kein zusätzlicher Platzbedarf, weil der gesamte Auslösemechanismus in den Elektromagneten integriert ist.

Weitere vorteilhafte Einzelheiten der Erfindung, die auch Gegenstand von Unteransprüchen sind, sind im folgenden anhand zweier in der Zeichnung dargestellter Ausführungsbeispiele näher erläutert. Es zeigt
- Fig. 1: einen Schnitt durch ein erstes Ausführungsbeispiel der neuen Kupplung und
- Fig. 2: einen entsprechenden Schnitt eines zweiten Ausführungsbeispiels der neuen Kupplung.

Die in der Zeichnung dargestellten beiden Ausführungsvarianten einer lösbaren Kupplung dienen bevorzugt zum Verriegeln und bedarfsweise Freigeben eines Überrollbügels eines Kraftfahrzeugs. Der (nicht dargestellte) Überrollbügel kann translatorisch, ggf. auch auf einer in Seitenansicht leicht gekrümmten Bewegungsbahn, aus einer abgesenkten Ruhelage, in der er etwa in der Höhe der Brüstungslinie des Fahrzeugs liegt, in eine aufgerichtete Wirkstellung verlagerbar sein, in der er bei einem Fahrzeugüberschlag die Fahrzeuginsassen schützt.

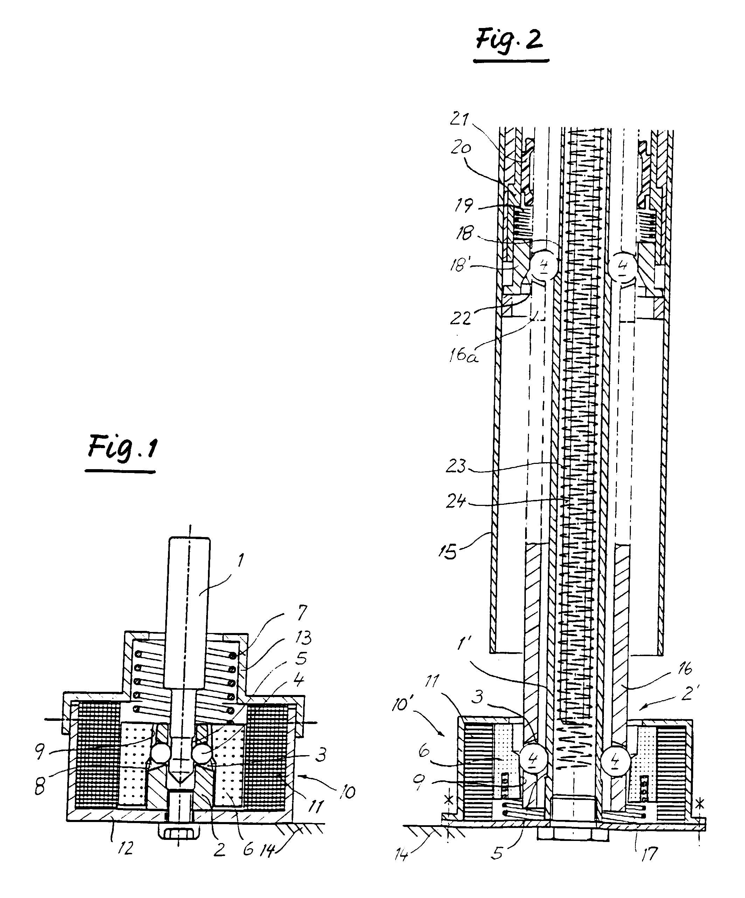

Das Ausführungsbeispiel nach Fig. 1 weist als erstes Kupplungsteil eine Haltestange 1 auf, die in der Praxis auch sehr dünn, beispielsweise als ein Stift von 5 bis 7 mm Durchmesser, ausgebildet sein kann. Die Haltestange 1 ist in nicht näher dargestellter Weise mit dem schon erwähnten translatorisch verlagerbaren Überrollbügel, beispielsweise über ein Querjoch verbunden. Das zweite Kupplungsteil besteht bei dem Ausführungsbeispiel nach Fig. 1 aus einem Halteelement 2, in dem Querbohrungen 3 zur Aufnahme von radial beweglichen Sperrkugeln 4 ausgebildet sind.

In der in der Zeichnung dargestellten Verriegelungsstellung greifen die Sperrkugeln 4 in eine flache Nut 5 am Außenumfang der Haltestange 1 ein. Die Sperrkugeln 4 werden unter der Wirkung eines Sperrgliedes 6 in die Nut gepreßt, das hierzu unter dem Einfluß einer Druckfeder 7 in der Zeichnung nach unten belastet wird. Das Sperrglied 6 hat zwei Innenkonusse 8 und 9. Der Innenkonus 9 drängt unter der axialen Federbelastung des Sperrgliedes 6 die Kugeln radial nach innen.

Das Halteelement 2 mit den Sperrkugeln 4 und dem Sperrglied 6 ist innerhalb des Elektromagneten 10 angeordnet. Der Elektromagnet 10 umfaßt im wesentlichen einen ringförmigen äußeren Spulenkörper 11 und einen von diesem umschlossenen ringförmigen, axial begrenzt beweglichen Anker aus ferromagnetischem Material, der gleichzeitig das Sperrglied 6 bildet.

Der Elektromagnet 10 ist von einem Gehäuse umschlossen, das ein etwa topfförmiges Unterteil und einen Deckel 13 umfaßt. Aus der Oberseite des Deckels 13 ragt die Haltestange 1 heraus. Weiterhin ist an dem Deckel 13 oben die schon erwähnte Feder 7 abgestützt.

Wird die Spule des Elektromagneten 10 erregt, bewegt sich das Sperrglied 6 bzw. der ferromagnetische ringförmige Anker gegen die Kraft der Feder 7 nach oben. In Folge der schon beschriebenen Konusse 8 und 9 können dann die Sperrkugeln 4 radial nach außen wandern und die Haltestange 1 ist entriegelt. Der Überrollbügel kann dann aus der Ruhestellung in die aufgerichtete Wirkstellung, häufig unter dem Einfluß von Antriebsfedern, aber auch hydraulisch oder pyrotechnisch, verlagert werden.

Das den Elektromagneten 10 umgebende Gehäuse ist an dem lediglich angedeuteten Fahrzeugaufbau 14 oder am Boden einer den Überrollbügel aufnehmenden Kassette, die ihrerseits wieder am Fahrzeugaufbau befestigt ist, angeordnet.

Das Zurückverlagem des Überrollbügels aus der Wirkstellung in die Ruhestellung kann durch manuelles Einschieben des Überrollbügels geschehen. Die Haltestange 1 weist an ihrem freien Ende eine Kegelspitze auf, die bei richtiger Bemessung der Konuswinkel der beiden Konusse 8 und 9 die Sperrkugeln so weit nach unten und radial nach außen drängt, daß die Sperrkugeln 4 in die flache Nut 5 eindringen können, in der sie dann durch das Sperrglied 6 festgehalten werden.

In dem Ausführungsbeispiel nach Fig. 2 ist eine Bauart der neuen Kupplung gezeigt, bei der die Haltestange fest mit dem angedeuteten Fahrzeugaufbau 14 oder einer ebenfalls angedeuteten Überrollbügel-Kassette 15 verbunden ist. Die Haltestange 1' weist in ihrem unteren Bereich ebenfalls eine flache Nut 5 auf. die in Verriegelungsstellung mit Sperrkugeln 4 zusammenwirkt. Das Halteelement 2' ist bei dem Ausführungsbeispiel nach Fig. 2 an wenigstens einem Schenkelende 16 des ansonsten nicht weiter dargestellten Überrollbügels angeordnet. Wie man erkennt, kann hierzu das Halteelement 2' auch direkt durch das untere Ende 16 eines Bügelschenkels gebildet sein.

Das durch den Ringanker des Elektromagneten 10' gebildete Sperrglied 6' wird durch eine Feder 17 in die in der Zeichnung dargestellte Verriegelungsstellung belastet, die sich am Boden des den Elektromagneten 10' umgebenden Gehäuses abstützt.

Wie man in Fig. 2 erkennt, ist die Haltestange 1' oberhalb der Nut 5 zum Verriegeln des Bügels in der Ruhestellung wenigstens mit einer weiteren Nut 18 versehen, die zum Fixieren des Überrollbügels in einer ausgefahrenen Stellung dient. Die ausgefahrene Stellung des Überrollbügels ist in Fig. 2 durch das angedeutete Schenkelende 16a wiedergegeben. Es wäre auch möglich, noch weitere der Nut 18 entsprechende Nuten in anderen Höhenabständen vorzusehen, um den Überrollbügel auch dann fixieren zu können, wenn er nicht ganz in die ausgefahrene Extremlage gelangt.

In Fig. 2 oben ist eine Sperrhülse 18' dargestellt, die gegen die Wirkung einer Feder 19 axial begrenzt in einem Führungsrohr 20 beim Ausfahren des Überrollbügels nach oben verlagerbar ist, dann aber beim Eintreten der Sperrkugeln 4 in die Nut 18 über die Feder so weit nach unten geschoben wird, daß die Sperrkugeln 4 nicht mehr aus der Nut 18 zurückweichen können. Zur reibungsärmeren Führung und zum Toleranzausgleich ist im Führungsrohr 20 noch eine elastische Kunststoff-Führungsbuchse 21 vorhanden.

Die Führungsstange 1' des Ausführungsbeispiels nach Fig. 2 ist, wie man erkennt, hohl ausgebildet und nimmt innen eine Antriebsfeder 23 zum schnellen Ausschieben des Überrollbügels nach Erregen des Elektromagneten 10' auf. Die Antriebsfeder 23 umgibt dabei noch einen Führungsdorn 24, der weiter oben (nicht dargestellt) an dem Überrollbügel abgestützt oder mit diesem verbunden ist.

## Patentansprüche

1. Kupplung für einen aus einer Ruhestellung durch einen Antrieb in eine Wirkstellung verlagerbaren Überrollbügel eines Fahrzeugs, mit einem ersten Kupplungsteil in Form einer Haltestange, die mit einer Nut zum Eingriff von Sperrkugeln versehen ist, welche in Querbohrungen eines an einem zweiten Kupplungsteil angeordneten Halteelementes radial beweglich sind und in Ruhestellung des Sicherheitsteils über eine Konusfläche eines sensorgesteuert durch einen Elektromagneten axial gegen Federkraft beweglichen Sperrgliedes in die Nut der Haltestange gepreßt werden,
dadurch gekennzeichnet, daß das Halteelement (2, 2') mit den Sperrkugeln (4) und das Sperrglied (6) innerhalb des Elektromagneten (10, 10') angeordnet sind.

2. Kupplung nach Anspruch 1,
dadurch gekennzeichnet, daß das Sperrglied (6) zwei Konusflächen (8. 9) mit unterschiedlichen Konuswinkeln aufweist, wobei der Bereich (9) mit dem flachen Konuswinkel in Ruhestellung mit den Sperrkugeln (4) zusammenwirkt.

3. Kupplung nach Anspruch 1 oder 2,
dadurch gekennzeichnet, daß das axial bewegliche Sperrglied (6) durch einen ringförmigen Anker des Elektromagneten (10, 10') gebildet ist.

4. Kupplung nach Anspruch 3,
dadurch gekennzeichnet, daß die Haltestange (1, 1') an ihrer äußeren Mantelfläche mit der Nut (5) zum Eingriff der Sperrkugeln (4) versehen ist.

5. Kupplung nach Anspruch 1,
dadurch gekennzeichnet, daß das Halteelement (2) am Fahrzeugaufbau (14) oder einem daran befestigten Gehäuse angeordnet ist, wobei die Haltestange (1) mit dem Sicherheitsteil verbunden ist.

6. Kupplung nach Anspruch 3 und 5,
dadurch gekennzeichnet, daß das Halteelement (2) in Ruhestellung vollständig vom ringförmigen Anker (Sperrglied 6) des Elektromagneten (10) umgeben ist.

7. Kupplung nach Anspruch 3,
dadurch gekennzeichnet, daß die den Ringanker (6) in die Verriegelungsstellung belastende Feder (7) an einem Deckel (13) des Gehäuses des Elektromagneten (10) abgestützt ist.

8. Kupplung nach Anspruch 1,
dadurch gekennzeichnet, daß die Haltestange (1, 1') mit einem translatorisch verlagerbaren Überrollbügel verbunden ist.

9. Kupplung nach Anspruch 1,
dadurch gekennzeichnet, daß das Halteelement (2') an wenigstens einem Schenkelende (16) eines translatorisch verlagerbaren U-förmigen Überrollbügels und die Haltestange (1') am Fahrzeugaufbau (14) bzw. einem daran befestigten Gehäuse angeordnet sind.

10. Kupplung nach Anspruch 9,
dadurch gekennzeichnet, daß das Halteelement (2') durch das untere Ende (16) eines Bügelschenkels gebildet ist.

11. Kupplung nach Anspruch 3 und 9,
dadurch gekennzeichnet, daß die den Ringanker (Sperrglied 6) in der Verriegelungsstellung belastende Feder (17) sich am Boden des den Elektromagneten (10') umgebenden Gehäuses abstützt.

12. Kupplung nach Anspruch 9,
dadurch gekennzeichnet, daß die Haltestange (1') oberhalb der Nut (5) zum Verriegeln in der Ruhestellung wenigstens eine weitere Nut (18) zum Fixieren des Überrollbügels in einer teilweise oder ganz ausgefahrenen Stellung aufweist.

13. Kupplung nach Anspruch 12,
gekennzeichnet durch eine in einem ortsfesten Führungsrohr (20) begrenzt gegen Federkraft (19) axial verschiebbare Hülse (18'), die innen mit wenigstens einem sich nach unten erweiternden Konus (22) versehen ist.

14. Kupplung nach Anspruch 9,
dadurch gekennzeichnet, daß die Haltestange (1') hohl ist und innen eine Antriebsfeder zum Ausfahren des Überrollbügels aufnimmt.

15. Kupplung nach Anspruch 1,
dadurch gekennzeichnet, daß die Querbohrungen (3) des Halteelementes (2) sich auf ihrer der Nut (5) abgewandten Seite nach oben und unten erweitern.

16. Kupplung nach Anspruch 1,
dadurch gekennzeichnet, daß die Querbohrungen (3) des Halteelementes (2') sich auf ihrer der Nut (5) zugewandten Seite nach oben und unten erweitern.

## Claims

1. A coupling for a roll bar of a vehicle movable by a drive from an inoperative position into an active position, comprising a first coupling part in the form of a retaining rod formed with a groove for engagement of locking balls which are radially movable in transverse bores in a retaining element disposed on a second part of the coupling and, when the safety part is in the inoperative position, are pressed into the groove in the retaining rod via a conical surface on a sensor-controlled locking element movable by an electromagnet axially against spring force,
characterised in that the retaining element (2, 2'), the locking balls (4) and the locking element (6) are disposed inside the electromagnet (10, 10').

2. A coupling according to claim 1,
characterised in that the locking element (6) has two conical surfaces (8, 9) with different cone angles, the region (9) having the smaller cone angle co-operating with the locking balls (4) in the inoperative position.

3. A coupling according to claim 1 or 2,
characterised in that the axially movable locking element (6) is in the form of an annular armature on the electromagnet (10, 10').

4. A coupling according to claim 3,
characterised in that the outer surface of the retaining rod (1, 1') is formed with the groove (5) for engaging the locking balls (4).

5. A coupling according to claim 1,
characterised in that the retaining element (2) is disposed on the vehicle body (14) or on a casing fastened thereto, the retaining rod (1) being connected to the safety part.

6. A coupling according to claims 3 and 5,
characterised in that in the inoperative position the retaining element (2) is completely surrounded by the annular armature (locking element 6) of the electromagnet (10).

7. A coupling according to claim 3,
characterised in that the spring biasing the annular armature (6) into the locked position is braced against a cover (13) of the casing of the electromagnet (10).

8. A coupling according to claim 1,
characterised in that the retaining rod (1, 1') is connected to a roll bar movable in translation.

9. A coupling according to claim 1,
characterised in that the retaining element (2') is disposed on at least one end (16) of an arm of a U-shaped roll bar movable in translation, and the retaining rod (1') is disposed on the vehicle body (14) or on a casing fastened thereto.

10. A coupling according to claim 9,
characterised in that the retaining element (2') is formed by the lower end (16) of an arm of the roll bar.

11. A coupling according to claims 3 and 9,
characterised in that the spring (17) which biases the annular armature (locking element 6) in the locked position abuts the base of the casing surrounding the electromagnet (10').

12. A coupling according to claim 9,
characterised in that above the groove (5) for locking in the inoperative position, the retaining rod (1') has at least one additional groove (18) for fixing the roll bar in a partly or completely extended position.

13. A coupling according to claim 12,
characterised by a sleeve axially movable to a limited extent against spring force (19) in a stationary guide tube (20) and internally formed with at least one downwardly widening cone (22).

14. A coupling according to claim 9,
characterised in that the retaining rod (1') is hollow and internally receives a drive spring for extending the roll bar.

15. A coupling according to claim 1,
characterised in that the transverse bores (3) in the retaining element (2) widen upwards and downwards on the side remote from the groove (5).

16. A coupling according to claim 1,
characterised in that the transverse bores (3) in the retaining element (2') widen upwards and downwards on the side facing the groove (5).

## Revendications

1. Dispositif d'accouplement pour un élément de sécurité d'un véhicule, en particulier un arceau, qu'un entraînement fait passer de sa position de repos à sa position active, comportant une première partie d'accouplement ayant la forme d'une tige de maintien portant une rainure d'engagement de billes d'arrêt, qui peuvent se déplacer radialement dans des perçages transversaux d'un élément de maintien monté sur une seconde partie d'accouplement et qui, lorsque l'élément de sécurité est en position de repos, sont poussées dans la rainure de la tige de maintien, par une portée conique d'un organe d'arrêt qui peut, sous la commande d'un détecteur, être déplacé axialement par un électroaimant, contre l'action d'un ressort,
caractérisé en ce que
l'élément de maintien (2, 2') avec les billes d'arrêt (4) et l'organe d'arrêt (6) est monté à l'intérieur de l'électroaimant (10, 10').

2. Dispositif d'accouplement selon la revendication 1,
caractérisé en ce que
l'organe d'arrêt (6) présente deux portées coniques (8, 9) ayant des angles de cône différents, la portée (9) à angle plat coopérant, en position d'arrêt, avec les billes d'arrêt (4) .

3. Dispositif d'accouplement selon la revendication 1 ou 2,
caractérisé en ce que
l'organe d'arrêt (6) mobile axialement est constitué par une armature, en forme d'anneau de l'électroaimant (10, 10').

4. Dispositif d'accouplement selon la revendication 3,
caractérisé en ce que
la tige de maintien (1, 1') porte, sur sa surface externe, la rainure (5) d'engagement des billes d'arrêt (4).

5. Dispositif d'accouplement selon la revendication 1,
caractérisé en ce que
l'élément de maintien (2) est monté sur la structure du véhicule (14) ou sur un boîtier fixé à celle-ci, la tige de maintien (1) étant reliée à l'élément de sécurité.

6. Dispositif d'accouplement selon les revendications 3 et 5,
caractérisé en ce que
l'élément de maintien (2), en position de repos, est totalement entouré par l'armature annulaire (organe d'arrêt 6) de l'électroaimant (10).

7. Dispositif d'accouplement selon la revendication 3,
caractérisé en ce que
le ressort (7) poussant l'armature annulaire (6) en position de verrouillage est en appui sur un couvercle (13) du boîtier de l'électroaimant (10).

8. Dispositif d'accouplement selon la revendication 1,
caractérisé en ce que
la tige de maintien (1, 1') est reliée à un arceau de sécurité se déplaçant par translation.

9. Dispositif d'accouplement selon la revendication 1,
caractérisé en ce que
l'élément de maintien (2') est monté sur au moins une extrémité (16) d'une branche d'un arceau de sécurité en forme de U, à mouvement de translation, tandis que la tige de maintien (1') est montée sur la structure (14) du véhicule ou sur un boîtier fixé à celle-ci.

10. Dispositif d'accouplement selon la revendication 9,
caractérisé en ce que
l'élément de maintien (2') est constitué par l'extrémité inférieure (16) d'une branche d'arceau.

11. Dispositif d'accouplement selon les revendications 3 et 9,
caractérisé en ce que
le ressort (17) poussant l'armature annulaire (organe d'arrêt 6) en position de verrouillage, s'appuie sur le fond du boîtier entourant l'électroaimant (10').

12. Dispositif d'accouplement selon la revendication 9,
caractérisé en ce que
la tige de maintien (1') présente, au-dessus de la rainure (5) servant au verrouillage en position de repos, comporte au moins une autre rainure (18) pour fixer l'arceau de sécurité dans une positon partiellement ou totalement dressée.

13. Dispositif d'accouplement selon la revendication 12,
caractérisé par
une douille (18') pouvant coulisser axialement contre l'action d'un ressort et de manière limitée à l'intérieur d'un tube de guidage (20), fixe, qui est munie intérieurement d'au moins un cône (22) s'évasant vers le bas.

14. Dispositif d'accouplement selon la revendication 9,
caractérisé en ce que
la tige de maintien (1') est creuse et reçoit à l'intérieur un ressort d'entraînement servant à dresser l'arceau de sécurité.

15. Dispositif d'accouplement selon la revendication 1,
caractérisé en ce que
les perçages transversaux (3) de l'élément de maintien (2) s'élargissent vers le haut et vers le bas, du côté opposé à la rainure (5).

16. Dispositif d'accouplement selon la revendication 1,
caractérisé en ce que
les perçages transversaux (3) de l'élément de maintien (2') s'élargissent vers le haut et vers le bas, du côté de la rainure (5).
